# EUROPÄISCHE PATENTANMELDUNG

(11) **EP 2 179 778 A1**
(43) Veröffentlichungstag der Anmeldung: **28.04.2010**
(21) Anmeldenummer: 09173651.2
(22) Anmeldetag: 21.10.2009
(51) Int. Cl.: B01D 53/86, H01S 3/036, H01S 3/223

(54) **Vorrichtung und Verfahren zur katalytischen Oxidation von in CO2-Laserschweiß- und schneidanlagen verwendeten Lasergasen**

(30) Priorität: 21.10.2008 DE 102008052617
(71) Anmelder: Zander Aufbereitungstechnik GmbH, 45219 Essen (DE)
(72) Erfinder: Schulte, Matthias, 45468, Mülheim a. d. Ruhr (DE)
(74) Vertreter: Cohausz & Florack

(57) **Zusammenfassung**

Dargestellt und beschrieben ist eine Vorrichtung zur katalytischen Oxidation von in CO₂-Laserschweiß- und schneidanlagen verwendeten Lasergasen zur Absenkung des CO-Gehalts der Lasergase einer Laseranlage mit einem Katalysator (3), einer mit einem Kompressor verbindbaren Zuleitung (4) und einem Drosselventil (8). Um eine zuverlässige und sowohl in der Anschaffung und im Betrieb kostengünstige Vorrichtung zu schaffen, die den CO-Gehalt des Lasergases durch katalytische Oxidation soweit absenken kann, dass das bei einem Gaswechsel auszutauschende Lasergas an die Umgebung entweichen kann ohne eine Gesundheitsgefahr darzustellen, weist die erfindungsgemäße Vorrichtung wenigstens einen Druckbehälter (2) zur Aufnahme und Speicherung der gesamten Gasmenge der Laseranlage auf, wobei diese Gasmenge unabhängig vom Betriebszustand der Laseranlage über das Drosselventil (8) ablassbar ist.

## Beschreibung

Die Erfindung betrifft eine Vorrichtung und ein Verfahren zur katalytischen Oxidation von in CO₂-Laserschweiß- und schneidanlagen verwendeten Lasergasen zur Absenkung des CO-Gehalts der Lasergase.

Im Gegensatz zu Festkörperlasern wird bei Gaslasern als laseraktives Medium ein Gas oder ein Gasgemisch eingesetzt. Unter den Industrielasern nimmt dabei der CO₂-Laser als Schweiß- und Schneidlaser eine bedeutende Stellung ein. Wie die Bezeichnung verrät, ist bei diesen Lasern Kohlenstoffdioxid das eigentliche Lasermedium, welches in der Praxis meist zusammen mit anderen Gasen wie Stickstoff und Helium als Gemisch in Laseranlagen eingesetzt wird. Im Zusammenhang mit dieser Erfindung ist unter dem Begriff "Laseranlage" beispielsweise eine Laserschweißanlage, eine Laserschneidanlage oder auch eine beliebige andere Anlage, die durch CO₂ als laseraktives Medium Laserstrahlen erzeugt, zu verstehen.

Die bekannten Laseraggregate werden zum Schutz vor der Bildung von Zerfallsprodukten mit einer Gasmischung beladen, deren Hauptanteil CO₂ ist. Neben Stickstoff und Helium enthält die Gasmischung aber auch einen 4% bis 8% Anteil CO. Dieser CO Anteil dient dazu, während der HF Lasererzeugung abgespaltene Elemente (wie O₂) sofort zu binden und in CO₂ zu wandeln. Der CO Anteil bildet also im Laseraggregat eine Art Abfangsystem gegen die Bildung von freiem Sauerstoff, der, sofern vorhanden, die Funktion des Lasers stört (Ionisierung).

Zwar verteilt sich freigewordenes CO nach gewisser Zeit im Raum, jedoch kann es je nach Raumgröße, Raumtemperatur und Luftzirkulation für Personen, die das Gas-Luftgemisch einatmen, zu einer Gesundheitsgefährdung oder bei sehr hoher Konzentration gar zum Tod kommen. Somit können Lasergase nicht bedenkenlos in die Umgebung abgelassen werden, ohne den gesundheitsgefährdenden CO-Gehalt zu verringern.

Aus dem Stand der Technik sind dazu vor allem Vorrichtungen zur kontinuierlichen Regeneration von Lasergasen bekannt. Das japanische Dokument JP 06-188485A offenbart eine Vorrichtung bei der das zirkulierende Lasergas während des Betriebs der Laseranlage kontinuierlich aufbereitet wird. Dazu strömt ein Teil des Gases durch eine parallel zum Kühlkreislauf verlaufende Regenerationsleitung.

Die Teilströmung, welche durch die Regerationsleitung strömt, wird vorgeheizt und gelangt in einen Reaktor, der einen Katalysator enthält. In dem Reaktor reagiert CO mit O₂ zu CO₂ und das Gasgemisch durchströmt zur Kühlung einen Kondensator bevor es wieder von der Regenerationsleitung in den Kühlkreislauf zurückströmt. In dem Kühlkreislauf findet keine chemische Reaktion statt, er dient lediglich dazu, die während des Betriebs der Laseranlage entstehende Wärme abzuführen.

Auch wenn die in der JP 06-188485A offenbarte Anlage eine kontinuierliche Aufbereitung von Lasergasen ermöglichen soll, zeigen sich einige nachteilige Eigenschaften.

Die Aufbereitung von Gasen ist ein ohnehin schon aufwändiges Verfahren, welches noch komplizierter wird, wenn so hohe Ansprüche an die Reinheit und das exakte Mischungsverhältnis der Gase gestellt werden wie bei Laseranlagen. Dies hat zur Folge, dass die aus dem Stand der Technik bekannten Vorrichtungen zur kontinuierlichen Aufbereitung von Lasergasen sowohl sehr teuer als auch technisch komplex und damit störanfällig sind.

Um eine Oxidationsreaktion ablaufen zu lassen, sieht die der im Stand der Technik beschriebenen Vorrichtung zu Grunde liegende Lehre vor, dass das Lasergas vor der Oxidation vorgeheizt und danach wieder abgekühlt wird. Dies erfordert einen hohen Energieeinsatz, was die Betriebskosten der Anlage erhöht und damit ihre Wirtschaftlichkeit verschlechtert. Auch die Nutzung der Abwärme zum Vorheizen der Lasergase kann diese Nachteile nur bedingt ausräumen, da eine derartige Funktion zwei weitere Wärmetauscher in einem zusätzlich vorzusehenden Kreislauf erfordert. Dadurch verstärkt sich das bereits beschriebene Problem hoher Kosten und technischer Komplexität noch weiter.

Die nach der aus dem Stand der Technik bekannten Lehre erforderliche kontinuierliche Überwachung der Gastemperatur an verschiedenen Stellen des Kreislaufs und die Einhaltung des exakten Mischungsverhältnisses der verschiedenen Bestandteile des Lasergases erfordern zahlreiche Sensoren, deren Messdaten präzise ausgewertet und interpretiert werden müssen. So kann beispielsweise bereits ein geringer Anstieg der O₂-Konzentration im Lasergas einen Abfall der Laserleistung und eine Beschädigung der Elektrode durch eine Lichtbogenentladung zur Folge haben. Auch dies verdeutlicht die technische Komplexität und Störanfälligkeit der Vorrichtung.

Ebenso nachteilig an der aus dem Stand der Technik bekannten Vorrichtung ist die Tatsache, dass eine derartige Vorrichtung aufgrund der zahlreichen bei der Regeneration von Gasen zu beachtenden Parametern wie Mischungsverhältnis, Druck und Temperatur genau auf die Laseranlage und das verwendete Lasergas abgestimmt werden muss. Somit erscheint ein Einsatz der bekannten Vorrichtung bei verschiedenen Laseranlagen oder gar eine Nachrüstung nicht sinnvoll zu sein.

Auch wenn eine Vorrichtung der vorbeschriebenen Art die Gefahr einer zu hohen CO-Konzentration im Lasergas verringert, kann sie einen - wenn auch nur gelegentlichen - Austausch des Lasergases nicht völlig überflüssig machen, da die Reinheit der Gase und die Vermeidung ungewollter chemischer Reaktionen nicht beliebig lange gewährleistet werden kann.

Vor diesem Hintergrund bestand die Aufgabe der Erfindung darin, eine zuverlässige und sowohl in der Anschaffung und im Betrieb kostengünstige Vorrichtung und ein entsprechendes Verfahren zu schaffen, die den CO-Gehalt des Lasergases durch katalytische Oxidation soweit absenken kann, dass das bei einem Gaswechsel auszutauschende Lasergas an die Umgebung entweichen kann ohne eine Gesundheitsgefahr darzustellen.

Diese Aufgabe wird erfindungsgemäß durch eine Vorrichtung der eingangs genannten Art gelöst, gekennzeichnet durch wenigstens einen Druckbehälter zur Aufnahme und Speicherung der gesamten Gasmenge der Laseranlage, wobei die Gasmenge unabhängig vom Betriebszustand der Laseranlage über das Drosselventil ablassbar ist.

Zudem wird die Aufgabe erfindungsgemäß durch ein Verfahren zur katalytischen Oxidation von in CO₂-Laserschweiß- und
- schneidanlagen verwendeten Lasergasgemischen zur Absenkung des CO-Gehalts der Lasergase durch die folgenden Schritte gelöst:

- Das Lasergas wird von der Laseranlage in den Druckbehälter gepumpt und dort komprimiert, wobei das Drosselventil geschlossen bleibt,
- CO wird in dem Druckbehälter durch den dort vorhandenen Luftsauerstoff und die durch die Kompression entstehende Wärme bei geschlossenem Drosselventil zu CO₂ umgewandelt, beschleunigt durch den Katalysator,
- nach ausreichender Kontaktzeit mit dem Katalysator entweicht das oxidierte Gasgemisch über das geöffnete Drosselventil langsam aus dem Druckbehälter in die Umgebung.

Gegenüber dem Stand der Technik hat die der erfindungsgemäßen Lösung zugrunde liegende Lehre erkannt, dass das Lasergas auch ohne kontinuierliche Regeneration nach der Behandlung in einer kostengünstigen und zuverlässigen Vorrichtung in die Umgebung abgelassen werden kann, ohne gesetzliche Grenzwerte der CO-Konzentration zu überschreiten. Die erfindungsgemäße Vorrichtung macht die aus dem Stand der Technik bekannten komplexen und störanfälligen Vorrichtungen zur kontinuierlichen Regeneration von Lasergasen obsolet, da auch diese den gelegentlichen Wechsel des Lasergasgemisches nicht verhindern können.

Die Typen von Laseranlagen in denen solche Gasmischungen eingesetzt werden, verfügen nicht über eine Regenerationseinheit mit Katalysator. Das Gasgemisch wirkt nur während der Laseraktivierung, es verhält sich also im Laseraggregat weitestgehend neutral. Dennoch können Zerfallsprodukte entstehen, die in der zuvor beschriebenen Weise sich nicht abfangen lassen. Daher wird das Gasgemisch in regelmäßigen Abständen erneuert. Die vorliegende Erfindung dient dazu, das aus dem Raum des Laseraggregates abgepumpte Gasgemisch zu neutralisieren. Daher steht die Erfindung nicht im Zusammenhang mit der sonst üblichen Gasregeneration.

Zudem hat die erfindungsgemäße Lösung den Vorteil, dass sie im Gegensatz zu komplexen Vorrichtungen zur kontinuierlichen Regeneration von Lasergasen an nahezu jeder bestehenden CO₂-Laseranlage einsetzbar und nachrüstbar ist, wobei lediglich das Volumen des Druckbehälters auf das Lasergasvolumen der Laseranlage abzustimmen ist. Indem erfindungsgemäß vorgesehen ist, dass der Druckbehälter die gesamte Gasmenge der Laseranlage aufnehmen kann, werden kurze Standzeiten der Laseranlage ermöglicht. Die Laseranlage kann direkt mit frischem Gas befüllt und wieder eingesetzt werden, während die katalytische Oxidation des ausgewechselten Gases noch andauert.

Ebenso vorteilhaft ist der erfindungsgemäße Verzicht auf zusätzlich einzubringende Wärmeenergie, beispielsweise durch ein Vorheizgerät. Die Kompression des Lasergases reicht in Verbindung mit dem in der Vorrichtung vorhandenen Luftsauerstoff und dem Katalysator aus, um die Oxidation wirksam ablaufen zu lassen.

Eine weitere Ausgestaltung der Erfindung sieht vor, dass ein separater Kompressor mit der Zuleitung verbunden ist. Separat bedeutet im Sinne der Erfindung, dass zusätzlich zu den in der Laseranlage vorhandenen Fördermitteln ein von der Laseranlage unabhängiges Fördermittel wie ein Kompressor vorgesehen ist. Dieser nicht zur Laseranlage, sondern zu der Vorrichtung zur katalytischen Oxidation gehörende Kompressor kann hinsichtlich seiner Eigenschaften genau auf die Bedürfnisse der Vorrichtung zur katalytischen Oxidation abgestimmt werden. Dies ist besonders vorteilhaft, da unabhängig von der Laseranlage, deren Lasergas zu behandeln ist, ein zuverlässiger Kompressor vorhanden ist, der dazu geeignet ist, das Lasergas in einen für die Katalyse erforderlichen hohen Druck zu versetzen. Natürlich kann statt eines Kompressors auch eine Pumpe oder ein beliebiges anderes Fördermittel mit gleicher Wirkung eingesetzt werden.

Nach einer besonders wirtschaftlichen Ausgestaltung der Erfindung ist die Evakuierungspumpe der Laseranlage mit der Zuleitung verbunden. Bei dieser Ausgestaltung kann also auf einen zusätzlichen Kompressor verzichtet werden. Der Verzicht auf einen separaten Kompressor wird möglich, da viele Laseranlagen bereits über einen eigenen Kompressor, eine Pumpe oder ein anderes Fördermittel zur Evakuierung der Laseranlage verfügen. Diese Ausgestaltung der Erfindung ist besonders kostengünstig und ressourcenschonend, da auf eine redundante Auslegung der Fördermittel verzichtet wird. Zudem kann bei der Nutzung der Evakuierungspumpe der Laseranlage die Energieversorgung der erfindungsgemäßen Vorrichtung vereinfacht werden oder sogar ganz entfallen, was die Kosten weiter absenkt und die Störanfälligkeit verringert.

Eine andere Lehre der Erfindung sieht vor, dass es sich bei dem Katalysator um Manganoxid handelt. Diese Ausgestaltung ist vorteilhaft, da Manganoxid ein wirksames Oxidationsmittel ist.

Alternativ kann es sich bei dem Katalysator auch um Kupferoxid handeln. Diese Ausgestaltung ist zweckmäßig, da Kupferoxid ein wirksames Oxidationsmittel ist.

Weiter alternativ kann der Katalysator auch aus Hopcalite bestehen. Diese Ausgestaltung ist vorteilhaft, da Hopcalite ein wirksames Oxidationsmittel aus verschiedenen Metalloxiden ist.

In vorteilhafter alternativer Ausgestaltung der Erfindung kann als Katalysator Carulite 300 eingesetzt werden, da auch Carulite 300 ein wirksames Oxidationsmittel ist. Carulite^{®} ist eine eingetragene Marke der Carus Corporation, La Salle, Ill., USA.

Die Wirksamkeit der Katalyse wird durch eine Ausgestaltung der Erfindung erhöht, wenn der Katalysator im Druckbehälter angeordnet ist. Da das Lasergas im Druckbehälter komprimiert und gespeichert wird, ist eine Anordnung des Katalysators im Druckbehälter besonders effektiv, da so eine lange Kontaktzeit zwischen Lasergas und Katalysator sichergestellt wird. Erfindungsgemäß ist jedoch jede andere Anordnung des Katalysators denkbar, bei der er mit dem Lasergas in Kontakt kommt.

Eine weitere Ausgestaltung der Erfindung zeichnet sich dadurch aus, dass in Strömungsrichtung vor dem Katalysator eine Schutzschicht aus Aktivkohle angeordnet ist. Diese Ausgestaltung ist besonders vorteilhaft, da sie einen Schutz des Katalysators vor Verunreinigungen und damit eine längere Einsatzdauer des Katalysators ermöglicht.

Die Sicherheit der Vorrichtung kann dadurch erhöht werden, dass zur Steuerung des Kompressors ein Druckschalter vorgesehen ist.

Darauf aufbauend ist nach einer weiteren Lehre der Erfindung der Kompressor bei Erreichen eines definierten Innendrucks im Druckbehälter durch den Druckschalter abschaltbar. Der Druckschalter wird dazu mit einer Information über den Innendruck des Druckbehälters - beispielsweise das Signal eines Drucksensors - versorgt. Bei Erreichen eines festzulegenden Innendrucks sendet der Druckschalter ein Signal, welches den Kompressor abschaltet. Diese Regelung hat den Vorteil, dass die Betriebssicherheit der Vorrichtung durch eine automatische Kompressorabschaltung gegenüber einer manuellen Kompressorbedienung deutlich erhöht wird. Ebenso trägt eine Automatisierung der Vorrichtung durch die Möglichkeit eines effizienten Personaleinsatzes zu einer Verbesserung der Wirtschaftlichkeit dieser Vorrichtung bei.

Nach einer weiteren optionalen Ausgestaltung der erfindungsgemäßen Vorrichtung ist ein Heizelement zum Vorheizen der Lasergase vorgesehen. Diese Ausgestaltung der Vorrichtung erweist sich als besonders vorteilhaft, da das Vorheizen der Lasergase sowohl eine störende Kondensatbildung verhindert, als auch die katalytische Oxidation beschleunigt. Es ist sowohl denkbar, dass das Vorheizen der Gase im Bereich der Zuleitung oder des Druckbehälters als auch an einer beliebigen anderen geeigneten Stelle erfolgt.

Eine alternative Lehre der Vorrichtung schlägt vor, dass ein Kondensatabscheider zur Trocknung der Lasergase vorgesehen ist. Diese Ausgestaltung bietet die vorteilhafte Möglichkeit, sich in der Vorrichtung bildendes Kondensat abzuscheiden. Bei variierenden Druck- und Temperaturverhältnissen ändert sich auch die Fähigkeit von Gasen, Flüssigkeiten aufzunehmen. Daher kann es in der erfindungsgemäßen Vorrichtung je nach Art der zu behandelnden Gase zu Kondensatbildung kommen. Die Möglichkeit der Abscheidung von Kondensat stellt sich sehr vorteilhaft dar, weil so die Durchnässung des Katalysators und die Korrosion metallischer Teile der Vorrichtung wirksam verhindert werden.

Nach einer weiteren Ausgestaltung der erfindungsgemäßen Vorrichtung ist vorgesehen, dass mehrere Druckbehälter zur Verarbeitung größerer Gasmengen vorgesehen sind. Da es sich bei der Aufbereitung der Lasergase durch die erfindungsgemäße Vorrichtung nicht um einen stationären, kontinuierlichen, sondern um einen zyklisch ablaufenden Prozess handelt, ist es besonders wichtig, dass die Vorrichtung die gesamte Gasmenge der Laseranlage aufnehmen kann. So werden kurze Standzeiten der Laseranlage möglich, da das Arbeitsgas in einem Schritt komplett von der erfindungsgemäßen Vorrichtung aufgenommen werden kann. Die Laseranlage kann direkt mit frischem Gas befüllt und wieder eingesetzt werden, währen die katalytische Oxidation noch andauert.

Damit die erfindungsgemäße Vorrichtung auch bei Laseranlagen mit vergrößertem Gasvolumen eingesetzt werden kann, kann die Vorrichtung mehrere Druckbehälter umfassen. Dies beinhaltet auch die Möglichkeit, dass ein oder mehrere Druckbehälter nachträglich installiert werden, um die Vorrichtung auch bei Laseranlagen einsetzen zu können, für die die Vorrichtung ursprünglich nicht vorgesehen war.

In vorteilhafter Ausgestaltung der Erfindung unterstützt das Speichern des Lasergases im Druckbehälter den katalytischen Prozess. Besonders zweckmäßig ist es, wenn das Abströmen des Lasergases aus dem Druckbehälter ins Freie so langsam wie möglich erfolgt.

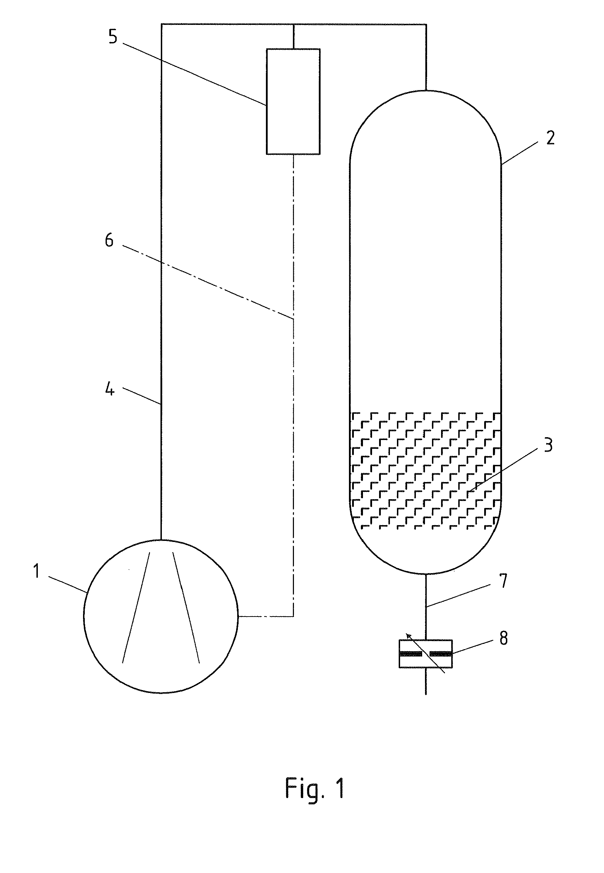

Im Folgenden wird die Erfindung anhand einer lediglich ein bevorzugtes Ausführungsbeispiel darstellenden Zeichnung näher erläutert. Die einzige Figur zeigt eine Vorrichtung zur katalytischen Oxidation von in CO₂-Laserschweiß- und schneidanlagen verwendeten Lasergasen in einer Gesamtansicht.

Die dargestellte Vorrichtung zur katalytischen Oxidation von in CO₂-Laserschweiß- und schneidanlagen verwendeten Lasergasen weist einen Kompressor 1 auf. Dieser Kompressor 1 kann sowohl als ein zu der Vorrichtung gehörender Kompressor, als auch als externer Kompressor - beispielsweise als Evakuierungspumpe der Laseranlage - interpretiert werden. Allgemein formuliert stellt der Kompressor 1 ein Fördermittel dar, welches zur Förderung des Lasergases von der Laseranlage in die erfindungsgemäße Vorrichtung geeignet ist. Ferner zeigt die Figur einen Druckbehälter 2, der teilweise mit Katalysator 3 gefüllt ist.

Zwischen Kompressor 1 und Druckbehälter 2 befindet sich eine Zuleitung 4, mit der ein Druckschalter 5 zur Messung des Drucks in der Zuleitung 4 und im Druckbehälter 2 verbunden ist. Zwischen dem Druckschalter 5 und dem Kompressor 1 besteht die Möglichkeit einer Signalübertragung, die durch eine strichpunktierte Linie 6 in der Figur dargestellt ist. Diese Signalübertragung kann kabelgebunden oder kabellos erfolgen und dient zur Steuerung des Kompressors 1 durch den Druckschalter 5. Neben der Zuleitung 4 ist eine Auslassleitung 7 an den Druckbehälter 2 angeschlossen. Die Auslassleitung 7 kann durch ein Drosselventil 8 geöffnet oder gesperrt werden.

## Patentansprüche

1. Vorrichtung zur katalytischen Oxidation von in CO₂-Laserschweiß- und schneidanlagen verwendeten Lasergasen zur Absenkung des CO-Gehalts der Lasergase einer Laseranlage mit einem Katalysator (3), einer mit einem Kompressor (1) verbindbaren Zuleitung (4) und einem Drosselventil (8), **gekennzeichnet durch** wenigstens einen Druckbehälter (2) zur Aufnahme und Speicherung der gesamten Gasmenge der Laseranlage, wobei diese Gasmenge unabhängig vom Betriebszustand der Laseranlage über das Drosselventil (8) ablassbar ist.

2. Vorrichtung nach Anspruch 1,
**dadurch gekennzeichnet, dass** ein separater Kompressor mit der Zuleitung verbunden ist.

3. Vorrichtung nach Anspruch 1,
**dadurch gekennzeichnet, dass** die Evakuierungspumpe der Laseranlage mit der Zuleitung verbunden ist.

4. Vorrichtung nach einem der Ansprüche 1 bis 3,
**dadurch gekennzeichnet, dass** es sich bei dem Katalysator (3) um Manganoxid handelt.

5. Vorrichtung nach einem der Ansprüche 1 bis 3,
**dadurch gekennzeichnet, dass** es sich bei dem Katalysator (3) um Kupferoxid handelt.

6. Vorrichtung nach einem der Ansprüche 1 bis 3,
**dadurch gekennzeichnet, dass** es sich bei dem Katalysator (3) um Hopcalite handelt.

7. Vorrichtung nach einem der Ansprüche 1 bis 3,
**dadurch gekennzeichnet, dass** es sich bei dem Katalysator (3) um Carulite 300 handelt.

8. Vorrichtung nach einem der Ansprüche 1 bis 7,
**dadurch gekennzeichnet, dass** der Katalysator (3) im Druckbehälter (2) angeordnet ist.

9. Vorrichtung nach Anspruch 8,
**dadurch gekennzeichnet, dass** in Strömungsrichtung vor dem Katalysator (3) eine Schutzschicht aus Aktivkohle angeordnet ist.

10. Vorrichtung nach einem der Ansprüche 2 bis 9,
**dadurch gekennzeichnet, dass** zur Steuerung des Kompressors ein Druckschalter (5) vorgesehen ist.

11. Vorrichtung nach Anspruch 10,
**dadurch gekennzeichnet, dass** der Kompressor bei Erreichen eines definierten Innendrucks im Druckbehälter (2) durch den Druckschalter (5) abschaltbar ist.

12. Vorrichtung nach einem der Ansprüche 1 bis 11,
**dadurch gekennzeichnet, dass** ein Heizelement zum Vorheizen der Lasergase vorgesehen ist.

13. Vorrichtung nach einem der Ansprüche 1 bis 11,
**dadurch gekennzeichnet, dass** ein Kondensatabscheider zur Trocknung der Lasergase vorgesehen ist.

14. Vorrichtung nach einem der Ansprüche 1 bis 13,
**dadurch gekennzeichnet, dass** mehrere Druckbehälter zur Verarbeitung größerer Lasergasmengen vorgesehen sind.

15. Verfahren zur katalytischen Oxidation von in CO₂-Laserschweiß- und schneidanlagen verwendeten Lasergasen zur Absenkung des CO-Gehalts der Lasergase in einer Vorrichtung nach einem der Ansprüche 1 bis 14, **gekennzeichnet durch** die folgenden Schritte:
- Das Lasergas wird von der Laseranlage in den Druckbehälter (2) gepumpt und dort komprimiert, wobei das Drosselventil (8) geschlossen bleibt,
- CO wird in dem Druckbehälter (2) **durch** den dort vorhandenen Luftsauerstoff und die **durch** die Kompression entstehende Wärme bei geschlossenem Drosselventil (8) zu CO₂ umgewandelt, beschleunigt **durch** den Katalysator (3),
- nach ausreichender Kontaktzeit mit dem Katalysator (3) entweicht das oxidierte Gasgemisch über das geöffnete Drosselventil (8) langsam aus dem Druckbehälter (2) in die Umgebung.

16. Verfahren nach Anspruch 15,
**dadurch gekennzeichnet, dass** das Speichern des Lasergases im Druckbehälter (2) den katalytischen Prozess unterstützt.

17. Verfahren nach Anspruch 15 oder 16,
**dadurch gekennzeichnet, dass** das Abströmen des Lasergases aus dem Druckbehälter (2) ins Freie so langsam wie möglich erfolgt.
